# EUROPEAN PATENT APPLICATION

(11) **EP 4 603 249 A1**
(43) Date of publication of application: **20.08.2025**
(21) Application number: 24305243.8
(22) Date of filing: 13.02.2024
(51) Int. Cl.: B28C 5/12, B01F 23/235, B01F 25/313, B01F 35/71, B28C 5/08, B28C 5/38, C04B 38/10

(54) **APPARATUS AND METHOD FOR MANUFACTURING A CEMENTITIOUS SLURRY**

(71) Applicant: SAINT-GOBAIN PLACO, 92400 Courbevoie (FR)
(72) Inventor: SAINGIER, Guillaume, 92400 Courbevoie (FR); JAFFEL, Hamouda, 92400 Courbevoie (FR); HESSOVA, Martina, 180 00 Prague (CZ); KAMLER, Radomir, 180 00 Prague (CZ)
(74) Representative: Murgitroyd & Company

(57) **Abstract**

According to the present invention, there is provided an apparatus (100) for manufacturing a cementitious slurry comprising foam, the apparatus comprising; a mixing chamber (105) for mixing a cementitious material and water to form a cementitious slurry, a channel (110) fluidly connected to the mixing chamber (105) at a first end (110a), the channel (110) for receiving a cementitious slurry from the mixing chamber (105), the channel (110) extending from the first end (110a) and terminating at at least one second end (110b); the apparatus comprising a first inlet (125) for introducing foam into the mixing chamber (105) or the channel (110); the apparatus (100) further comprising a second inlet (130) for introducing a coalescence inhibiting additive into the cementitious slurry downstream of the first inlet (125). A method using the apparatus is also described.

## Description

### FIELD OF THE INVENTION

The present invention relates to apparatus for manufacturing a cementitious slurry comprising foam. The present invention also relates to a method of manufacturing a cementitious slurry comprising foam using the apparatus.

### BACKGROUND TO THE INVENTION

Gypsum occurs naturally as a raw material in the form of calcium sulphate dihydrate (CaSO₄ 2(H₂O)). Gypsum containing products, such as plasterboard, are prepared by forming a mixture of calcined or dehydrated gypsum, namely calcium sulphate hemihydrate (CaSO₄ 0.5(H₂O)), with water, to form a settable slurry that is then cast into a pre-determined shape. The calcium sulphate hemihydrate reacts with the water and becomes re-hydrated to the dihydrate crystal, which is then cured or dried to the solid state.

Due their versatility, desirable mechanical properties and the possibility of achieving a high level of finish, gypsum products are commonly found throughout buildings. As such, there is a desire to produce gypsum products. A reduction in the quantity of gypsum used to create these products substantially reduces the resource demand of the manufacturing process, therefore reducing material costs. Additionally, reducing the weight of gypsum products can be advantageous in increasing the ease with which the gypsum products can be handled and manipulated.

To provide a lightweight gypsum product, foam can be added to the settable gypsum slurry. When foam is added to a gypsum slurry, the bubbles within the foam become dispersed throughout the slurry, reducing its density. During the setting process, the bubbles within the foam persist, forming voids in the final gypsum product. In this way, the density of the final gypsum product is reduced. As the voids in the final gypsum product are formed from the foam bubbles within the gypsum slurry, the size of the foam bubbles correlates with the size of the voids.

Given the above, controlling the size of the bubbles within the foam and gypsum slurry is of key importance during the manufacture of a lightweight gypsum product. Where an unstable foam is introduced into the gypsum slurry, the bubbles within the foam coalesce. As such, it is necessary to control the coalescence of bubbles within the foam and gypsum slurry if the size of the voids within the final gypsum product is to be similarly controlled.

However, any foam does not exist in isolation within a gypsum slurry. Gypsum products frequently contain additives to control and/or improve other properties of the final gypsum product, such as its water resistance. As well as altering the properties of the final gypsum product, many of these additives can also inhibit the coalescence of bubbles within the foam and/or gypsum slurry. Therefore, controlling the size of bubbles within the gypsum slurry to maintain a desired void size in a gypsum product is complex and challenging, and is influenced by many factors.

### SUMMARY OF THE INVENTION

According to a first aspect of the present invention, there is provided an apparatus for manufacturing a cementitious slurry comprising foam, the apparatus comprising; a mixing chamber for mixing a cementitious material and water to form a cementitious slurry, a channel fluidly connected to the mixing chamber at a first end, the channel for receiving a cementitious slurry from the mixing chamber, the channel extending from the first end and terminating at at least one second end; the apparatus comprising a first inlet for introducing foam into the mixing chamber or the channel; the apparatus further comprising a second inlet for introducing a coalescence inhibiting additive into the cementitious slurry downstream of the first inlet.

The present invention provides an apparatus for efficiently and consistently combining foam with a cementitious slurry, such as a stucco or gypsum slurry. In the prior art, the presence of many additives in the slurry when the foam is introduced has the effect of partially or totally inhibiting coalescence, stabilising the bubbles in the foam-slurry mixture. The present invention addresses this problem of the prior art, as coalescence inhibiting additives can be added after adequate coalescence has occurred.

Preferably, the channel comprises a plurality of second ends. Alternatively, the channel comprises a single second end.

Preferably, the at least one second end of the channel is connected to a distribution hose. More preferably, the distribution hose comprises a plurality of slurry outlets. Still more preferably, the distribution hose comprises a plurality of equivalent slurry outlets. Where the distribution hose comprises a plurality of outlets, this may assist in ensuring an even distribution of cementitious slurry across an area as it exits the apparatus.

Alternatively, the at least one second end of the channel is connected to a secondary chamber. Where a secondary chamber is connected to the at least one second end of the channel, this may advantageously provide further mixing to the cementitious slurry.

Preferably, the second inlet is located between the first inlet and the at least one second end of the channel. Alternatively, the second inlet is located in the secondary chamber. In this way, any additives which inhibit coalescence can be added to the cementitious slurry downstream of the first inlet to ensure adequate bubble coalescence.

In some embodiments, the first inlet comprises a plurality of first inlets. In this way, foam may be introduced at a number of points in the apparatus. Preferably, at least one first inlet of the plurality of first inlets is located in the mixing chamber. Preferably, at least one first inlet of the plurality of first inlets is located in the channel. In some embodiments, at least one first inlet of the plurality of first inlets is located in the mixing chamber and at least one first inlet of the plurality of first inlets is located in the channel.

Preferably, the second inlet comprises a fluid inlet. More preferably, the second inlet consists of a fluid inlet. In this way, liquid coalescence inhibiting additives can be introduced into the cementitious slurry.

Preferably, the apparatus further comprises a third inlet for introducing a coalescence promoting agent into the cementitious slurry. Preferably, the third inlet is located upstream of the second inlet. Preferably, the second inlet is located downstream of the first inlet. As such, bubble coalescence can be aided after the foam is introduced into the cementitious slurry and prior to the introduction of a coalescence inhibiting additive.

Preferably, the third inlet is located in the channel. Alternatively, the third inlet is located in the mixing chamber. Alternatively, the third inlet is combined with the first inlet.

Preferably, the distance between the third inlet and the first inlet is less than the distance between the third inlet and the second inlet. In this way, the impact of the coalescing promoting agent on bubble coalescence can be increased. More preferably, the third inlet is adjacent to said first inlet.

Alternatively, the third inlet is located closer to the second inlet than the first inlet.

Preferably, the third inlet comprises a fluid inlet. More preferably, the third inlet consists of a fluid inlet. In this way, liquid coalescence promoting agents can be introduced into the cementitious slurry.

Alternatively, the first inlet is configured to introduce a coalescence promoting agent into the cementitious slurry. In this way, foam and at least one coalescence promoting agent can be introduced into the slurry, simultaneously or independently, via the first inlet. For example, the coalescence promoting agent and foam can be mixed together prior to introduction into the cementitious slurry via the first inlet.

Preferably, the mixing chamber is a tangential mixing chamber. Preferably, the tangential mixer comprises a single mixing member. Alternatively, the tangential mixer comprises a plurality of mixing members.

Preferably, the channel is substantially straight. In select embodiments, the channel is substantially curved. Preferably, the channel has a substantially similar cross sectional area throughout its length. Preferably, the channel has a substantially similar cross sectional shape throughout its length. More preferably, the channel has a substantially similar cross sectional area and substantially similar cross sectional shape throughout its length. In some embodiments, the channel has the same cross sectional area throughout its length. In some embodiments, the channel has the same cross sectional shape throughout its length.

Preferably, the first inlet has a substantially circular cross-section. Alternatively, the first inlet has a substantially square or rectangular cross-section.

Preferably, the second inlet has a substantially circular cross-section. Alternatively, the second inlet has a substantially square or rectangular cross-section.

Preferably, the third inlet has a substantially circular cross-section. Alternatively, the third inlet has a substantially square or rectangular cross-section.

Preferably, the channel comprises a circular cross section. Alternatively, the channel comprises a rectangular or square cross section.

Preferably, the cementitious material comprises at least one of calcium sulphate hemihydrate and calcium sulphate dihydrate. More preferably, the cementitious material consists essentially of calcium sulphate hemihydrate.

According to a second aspect of the present invention, there is provided a method of manufacturing a cementitious slurry comprising foam, the method comprising; providing the apparatus of the first aspect of the present invention; introducing a cementitious material and water into the mixing chamber to form a cementitious slurry; introducing foam into the cementitious slurry via the first inlet; and introducing a coalescence inhibiting additive into the cementitious slurry via the second inlet.

Preferably, the apparatus comprises the third inlet and the method comprises introducing a coalescence promoting agent into the cementitious slurry via the third inlet. The coalescence promoting additive may be any additive which has the intended or unintended effect of promoting coalescence. Preferably, the coalescence promoting agent is a liquid.

The coalescence inhibiting additive may be any additive which has the intended or unintended effect of inhibiting coalescence. Preferably, the coalescence inhibiting additive comprises polycarboxylate (PCE). PCE is advantageous in improving fluidity of the cementitious slurry, however it produces the undesirable effect of inhibiting coalescence of the bubbles in the cementitious slurry.

Alternatively or additionally, the coalescence inhibiting additive comprises one or more of Potassium Sulphate (K₂SO₄), Lithium Sulphate (Li(II)SO₄) and/or Zinc Sulphate (ZnSO₄). Potassium Sulphate, Lithium Sulphate and Zinc Sulphate are known accelerators used to advantageously shorten the reaction time for the cementitious slurry to dry and harden.

Preferably, the coalescence promoting agent comprises Poly Naphthalene Sulfonate (PNS). Alternatively or additionally, the coalescence promoting agent comprises Silicone Oil.

Wherein the cementitious material comprises or consists of calcium sulphate hemihydrate (stucco), preferably, the coalescence inhibiting additive is introduced in an amount from 0.1 to 2 wt% relative to the stucco. More preferably, the coalescence inhibiting additive is introduced in an amount from 0.1 to 1 wt% relative to the stucco. Preferably, coalescence promoting agent is introduced in an amount from 0.1 to 5 wt% relative to the stucco. More preferably, the coalescence promoting agent is introduced in an amount from 0.1 to 1 wt% relative to the stucco.

### DETAILED DESCRIPTION

Embodiments of the present invention will now be described by way of example only and with reference to the accompanying drawings, in which:
Figure 1 depicts an embodiment of an apparatus according to the first aspect of the invention;
Figure 2 depicts a schematic diagram of the apparatus of Figure 1;
Figure 3 depicts a method according to the second aspect of the invention;
Figures 4A, 4B, 5A and 5B depict images of bubbles formed within cementitious slurry during plant testing and the apparatus used for each test;
Figure 6 depicts a schematic diagram of an apparatus falling outside the scope of the invention;
Figure 7 depicts a schematic diagram of the steps for laboratory replication of the apparatus of Figure 2;
Figure 8 depicts a schematic diagram of the steps for laboratory replication of the apparatus of Figure 6; and
Figures 9A, 9B, 10A and 10B depict images of bubbles formed within cementitious slurry during laboratory testing and the apparatus used for each test.

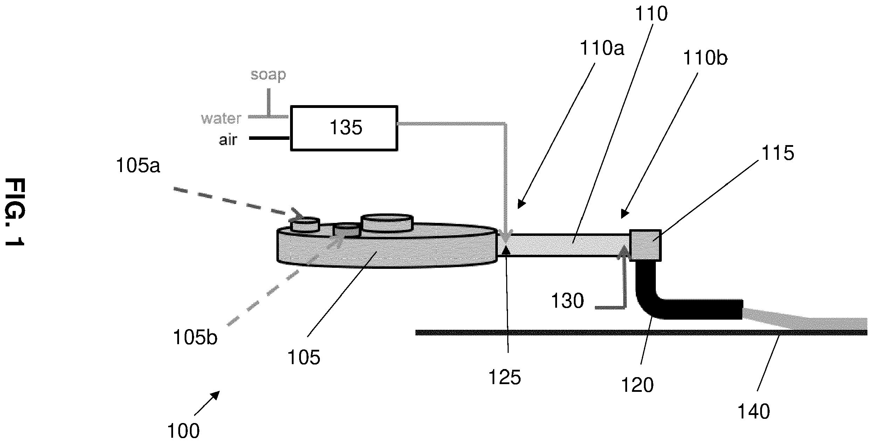

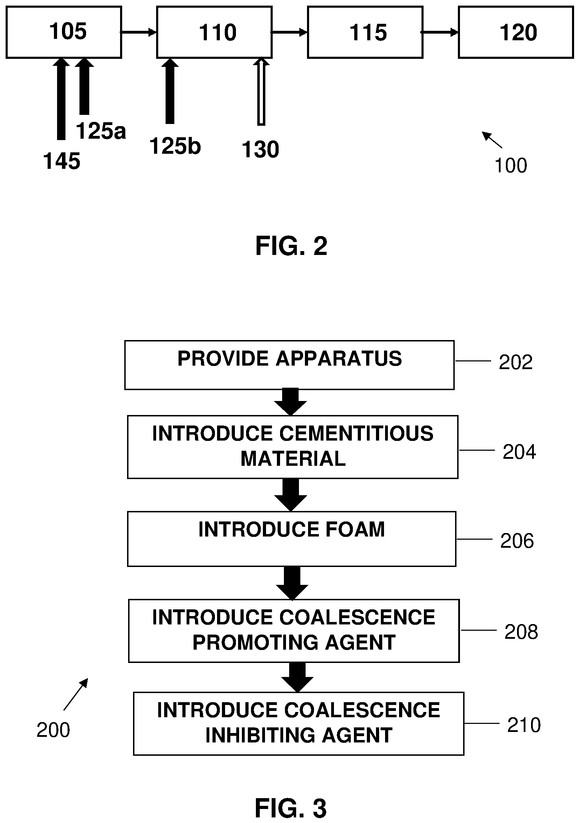

With reference to Figures 1 and 2, an apparatus 100 for manufacturing a cementitious slurry comprising foam according to the first aspect of the invention is shown. The apparatus 100 comprises a mixing chamber 105 for mixing a cementitious material and water to form a cementitious slurry. The mixing chamber 105 comprises a cementitious material inlet 105a, such as an inlet for the introduction of stucco into the mixing chamber 105, and a water inlet 105b for the introduction of water into the mixing chamber 105.

The apparatus 100 further comprises a channel 110 extending from a first end 110a and terminating at a second end 110b. The channel 110 is fluidly connected to the mixing chamber at the first end 110a. The channel 110 is configured to receive a cementitious slurry from the mixing chamber 105.

The apparatus 100 further comprises a secondary chamber 115 and a distribution hose 120 fluidly connected to the secondary chamber 115. The second end 110b of the channel 110 is connected to the secondary chamber 115, such that the channel 110 is coupled to the distribution hose. The cementitious slurry is configured to exit the second end 110b channel 110, pass through the secondary chamber 115 and into the distribution hose 120.

The distribution hose 120 is configured to distribute the cementitious slurry and foam mixture onto, for example, a forming table 140 wherein sheets or boards may be formed from the cementitious slurry.

The secondary chamber 115 is fluidly connected to the distribution hose 120. The second end 110b of the channel 110 is located perpendicular to the outlet 25 of the secondary chamber 115, such that the cementitious slurry is configured to travel tangentially through the secondary chamber 115. In this way, the secondary chamber 115 further mixes the cementitious slurry and foam, promoting coalescence of the bubbles formed in the mixture.

The apparatus 100 further comprises a pair of first inlets 125a, 125b configured to introduce foam into the mixing chamber 105 and the channel 110. A primary inlet 125a of the pair of first inlets 125a, 125b is located in the mixing chamber 105 and a secondary inlet 125b of the pair of first inlets 125a, 125b is located in the channel 110, as illustrated on Figure 2.

It is understood the terms primary and secondary relate to the location of the inlets in an upstream direction, not to the importance of the inlet or the quantity of foam configured to be introduced via the inlet. Namely, the primary inlet 125a is located upstream of the secondary inlet 125b. The secondary inlet 125b is located at the first end 110a of the channel. The pair of first inlets 125a, 125b are configured to be connected to a source of foam, such as a foam generating unit 135 comprising an air inlet, water inlet and soap inlet.

The second inlet 130 is a fluid inlet located in the channel 110 and configured to introduce a coalescence inhibiting additive into the cementitious slurry. The second inlet 130 is located in the channel 110, downstream of both the primary inlet 125a and secondary inlet 125b of the pair of first inlets 125a, 125b. The second inlet 130 is located between the secondary inlet 125b of the pair of first inlets 125a, 125b and the second end 110b of the channel 110. In this way, the apparatus is configured such that the coalescence inhibiting additive is introduced into the cementitious slurry downstream of the location of introduction of the foam to the cementitious slurry.

The apparatus 100 further comprises a third inlet 145 for, optionally, introducing a coalescence promoting agent, such as poly naphthalene sulfonate (PNS), into the apparatus 100. The third inlet 145 is located in the mixing chamber 105, upstream of the primary inlet 125a of the pair of first inlets 125a, 125b. In this way, coalescence in the cementitious slurry is promoted by the coalescence promoting agent as soon the foam is introduced into the cementitious slurry. Alternatively, a coalescence promoting agent may be introduced into the cementitious slurry via one or more of the pair of first inlets 125a, 125b, such as by mixing the coalescence promoting agent with foam prior to introducing the foam into the cementitious slurry.

As illustrated in Figure 2, the distance between the third inlet 145 and the pair of first inlets 125 is less than the distance between the third inlet 145 and the second inlet 130.

Figure 3 illustrates a schematic diagram of a method 200 of manufacturing a cementitious slurry comprising foam according to a second aspect of the invention. The method 200 comprises, providing 202 the apparatus 100 of the first aspect of the invention. The method 200 further comprises introducing 204 a cementitious material and water into the mixing chamber 105 to form a cementitious slurry.

The method 200 further comprises introducing 206 foam into the cementitious slurry via the pair of first inlets 125a, 125b and, optionally, introducing 208 a coalescence promoting additive into the cementitious slurry via the third inlet 145 or one or more of the first inlets 125a, 125b.

The method 200 further comprises the step of introducing 210 a coalescence inhibiting agent into the cementitious slurry via the second inlet 130.

### PLANT TESTING

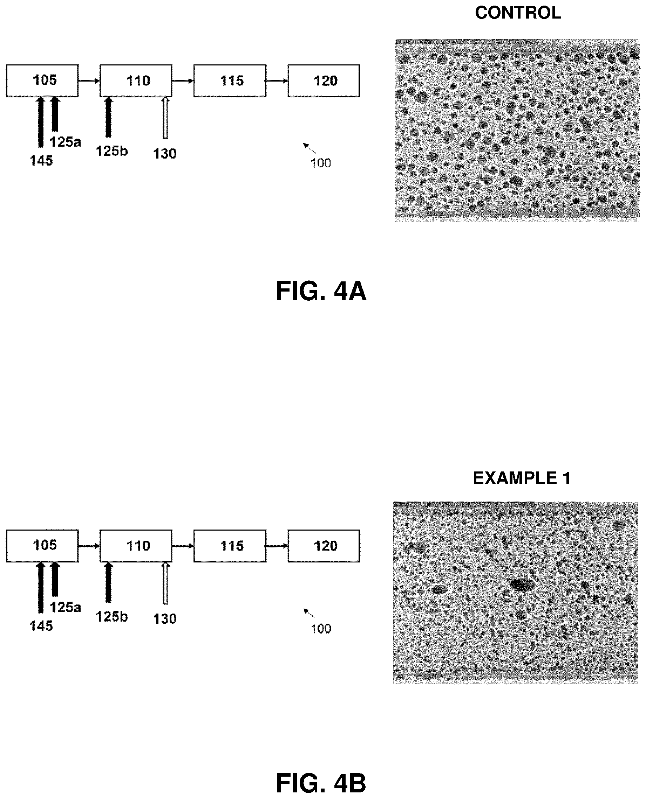

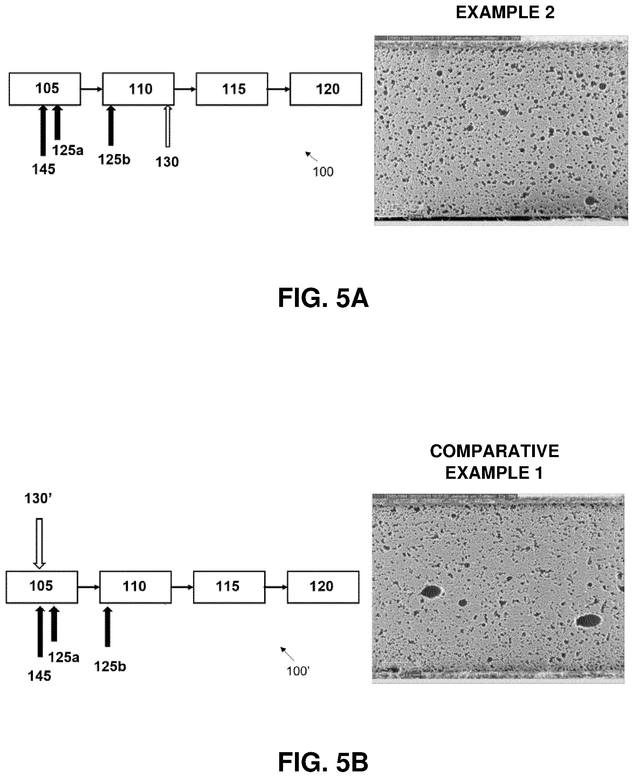

The apparatus 100 was used in plant testing to produce the results shown in Figures 4 and 5. Images of the bubble size were taken using. an USB camera and a LED light ring.

Lightweight gypsum samples, namely gypsum plasterboards, were produced having a 12.5 mm thickness and a weight of 8.8 kg/m² using a line speed of 40 m/min. Cementitious material was introduced into the apparatus 100 at a rate of 10 Us.

The cementitious material comprised calcium sulphate hemihydrate (stucco) in an amount of 7116 g/m² and was mixed with water in an amount of 5975 g/m². The water gauge of the cementitious slurry was 70% and the unstable soap concentration was 0.4%. The fluidity of the cementitious slurry was slump tested and a 180 mm slump was measured. Slump testing was performed as is known in the art, wherein a spreading test is used to assess the viscosity of the slurry. The slurry was poured into a 5 cm diameter and 10 cm height ring. The slurry then spreads under gravity by lifting the ring and the slump is assessed. The cementitious slurry took 30 seconds to set using the knife set method of testing. The knife set method was performed as is known in the art, wherein the knife set method allows measurement of the initial setting time of the slurry. Initial setting time corresponds to the time wherein the slurry experiences liquid to solid state transition.

Samples were cut from the boards produced and the surface of these samples was abraded to provide a clean surface from which to analyse the pore size distribution.

The location of the second inlet 130 was modified during testing such that the effect of the location of introduction of a coalescence inhibiting additive relative to location of introduction of the foam could be studied.

Plant testing identified whether adequate coalescence had occurred in trials where the location of introduction of a coalescence inhibiting additive was varied. Adequate coalescence was deemed to have occurred if the median bubble diameter (measured as the D50 distribution measurement) was larger than 200 µm. A median bubble size larger than 200 µm produces visible bubbles, as illustrated in Figures 4A, 4B and 5A.

The coalescence inhibiting additive introduced into the apparatus 100 via the second inlet 130 was a poly carboxylate ether (PCE). The coalescence promoting agent introduced into the apparatus via the third inlet 145 was poly naphthalene sulfonate (PNS).

### Control

As a control, no coalescence inhibiting additive was introduced into second inlet 130 of the apparatus 100 of Figures 1 and 2. PNS was introduced into the third inlet 145 as a coalescence promoting agent in an amount of 0.41 wt% relative to the stucco (29.5 g/m²). The apparatus and bubble distribution obtained are shown in Figure 4A. The image of Figure 4A has dimensions 16.6 mm x 12.5 mm.

### Example 1

The apparatus 100 was again tested in Example 1. The second inlet 130 is located at the end of the channel 110, as illustrated in Figure 2. The distance between the second inlet 130 and the mixing chamber 105 is 2.25 m. The total length of the channel 110 is 2.25 m. PCE was introduced into the cementitious slurry, via the second inlet 130, as the coalescence inhibiting additive in an amount of 0.1 wt% relative to the stucco (7 g/m²). PNS was introduced into the third inlet 145 as a coalescence promoting agent in an amount of 0.41 wt% relative to the stucco (29.5 g/m²). The apparatus and bubble distribution obtained are shown in Figure 4B. The image of Figure 4B has dimensions 16.6 mm x 12.5 mm.

### Example 2

The apparatus 100 was again tested in Example 2 with the second inlet 130 located at the end of the channel 110, as illustrated in Figure 2. The conditions for Example 2 are substantially identical to those of Example 1, with the modification that a reduced quantity of PNS was introduced into the third inlet 145 as a coalescence promoting agent in an amount of 0.09 wt% relative to the stucco (6.3 g/m²). PCE was introduced into the second inlet 130 in an amount of 0.16 wt% relative to the stucco (11.5 g/m²). The apparatus and bubble distribution are shown in Figure 5A.. The image of Figure 5A has dimensions 16.6 mm x 12.5 mm.

### Comparative Example 1

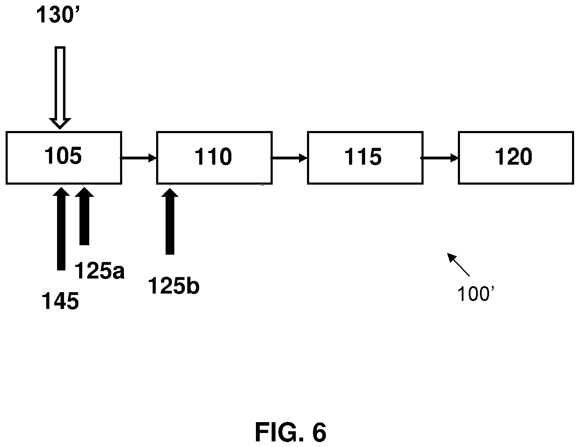

Figure 6 depicts a diagram of the apparatus 100' of Comparative Example 1. The apparatus 100' is substantially identical to the apparatus 100 of Figure 2 with the modification that a second inlet 130' is located upstream of the pair of first inlets 125a, 125b. The apparatus 100' falls outside of the scope of the invention as the second inlet 130' is located upstream of the pair of first inlets 125a, 125b. The second inlet 130' is located in the mixing chamber 105, at the same location as the third inlet 145. PCE was again introduced into the cementitious slurry, via the second inlet 130', as the coalescence inhibiting additive in an amount of 0.16 wt% relative to the stucco (11.5 g/m²).

The same conditions as Example 2 were used in Comparative Example 1. PNS was again introduced in an amount of 0.09 wt% relative to the stucco (6.3 g/m²).

In Comparative Example 1, the coalescence inhibiting additive is introduced upstream of the location of introduction of the foam to the cementitious slurry. The apparatus and bubble distribution are shown in Figure 5B. The image of Figure 5B has dimensions 16.6 mm x 12.5 mm.

Table 1 shows the bubble size distribution for each test.

**Table 1**

| **Example** | **D50 bubble size (µm)** | **Acceptable Coalescence** |
|---|---|---|
| Control | 465 | Yes |
| Example 1 | 262 | Yes |
| Example 2 | 208 | Yes |
| Comparative Example 1 | 144 | No |

It can be observed from Figures 4A and 4B the negative effect on bubble coalescence in the cementitious slurry due to the introduction of a coalescence inhibiting additive, and the consequent reduction in the D50 value. However, the D50 value of Example 1 remains within an acceptable limit, namely the value is greater than 200 µm. The foam introduced into the apparatus 100 had an initial D50 bubble size of 100 µm.

It is understood that the D50 value is the median bubble diameter measured by image analysis on the abraded surface of the samples, which corresponds to a two-dimensional pore size.

Coalescence inhibiting additives can be highly advantageous in improving other characteristics of the cementitious slurry, such as fluidity. Therefore, it is desirable to introduce coalescence inhibiting additives into the cementitious slurry and to optimise the location of introduction of the coalescence inhibiting additive to reduce their negative impact on coalescence.

An improvement in coalescence is observed in Figures 5A and 5B when the coalescence inhibiting additive is introduced downstream of the location of introduction of foam, namely the location of the pair of first inlets 125a, 125b, compared to when the coalescence inhibiting additive is located upstream of the pair of first inlets 125a, 125b. Namely, the coalescence is reduced by 31% when the coalescence inhibiting additive is located upstream of the pair of first inlets 125a, 125b.

The D50 value of Example 2 remains within the acceptable limit of greater than 200 µm despite the reduction in coalescence promoting agent. Whereas the D50 value of Comparative Example 1 falls well below the acceptable limit.

### LABORATORY TESTING

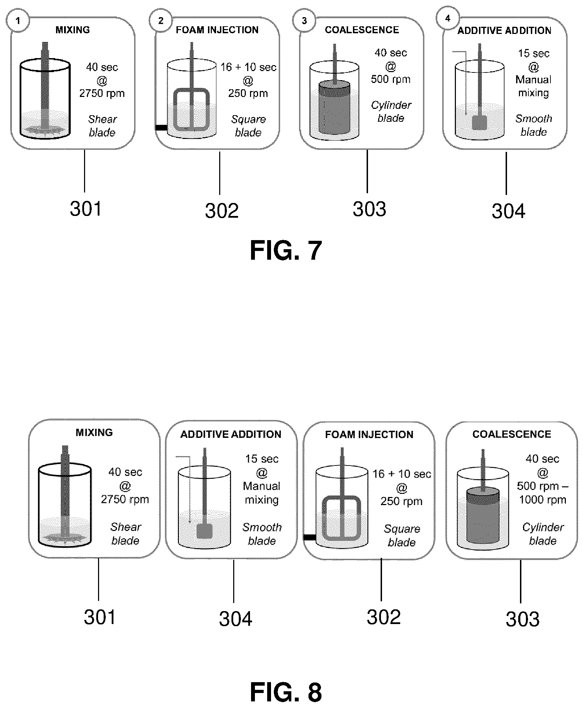

Figure 7 illustrates the laboratory steps performed to replicate the conditions experienced with an apparatus according to the present invention, more particularly an apparatus as illustrated in Figure 2. To replicate conditions in the mixing chamber 105, in a first laboratory step cementitious material and water were mixed in a vessel using a shear blade for 40 seconds at 2750 rpm in mixing step 301. To replicate foam injection into the plurality of first inlets 125a, 125b in the mixing chamber 105 and channel 115, cementitious material and water were mixed using a square blade for 16 seconds and at 250 rpm in foam injection step 302. The foam was then added to the cementitious material and water in the vessel to form a cementitious slurry and the cementitious slurry was then mixed using a square blade for 10 seconds and at 250 rpm.

To replicate addition of a coalescence of the cementitious slurry within the channel 115, in coalescence step 303 the cementitious slurry was mixed using a cylinder blade for 40 seconds, at a speed of 500 rpm. Moderate shear was introduced into the cementitious slurry by the cylinder blade, replicating the shear forces experienced by the slurry in the channel 115.

To replicate addition of a coalescence inhibiting additive via the second inlet 130, in additive addition step 304 the cementitious slurry was manually mixed for 15 seconds using a smooth blade. The dosage of unstable soap concentration was adapted to replicate plant conditions within the laboratory testing.

Similarly, Figure 8 illustrates the laboratory steps performed to replicate the conditions experienced with an apparatus falling outside of the present invention, more particularly an apparatus as illustrated in Figure 6.

In a first laboratory step cementitious material and water were mixed in a vessel using a shear blade for 40 seconds at 2750 rpm in mixing step 301. The mixing step 301 is followed by the additive addition step 304, wherein the coalescence inhibiting additive was introduced into the vessel. In additive addition step 304 the cementitious slurry was manually mixed for 15 seconds using a smooth blade.

There follows the foam injection step 302 and the coalescence step 303. To replicate foam injection into the plurality of first inlets 125a, 125b in the mixing chamber 105 and channel 115, foam was then added to the cementitious material, water and coalescence inhibiting additive in the vessel. The foam, cementitious material, water and coalescence inhibiting additive were mixed using a square blade for 16 seconds and at 250 rpm in foam injection step 302. The foamed cementitious slurry was then mixed using a square blade for 10 seconds and at 250 rpm to homogenise the mixture. To replicate addition of a coalescence of the cementitious slurry within the channel 115, in coalescence step 303 the cementitious slurry was mixed using a cylinder blade for 40 seconds, at a speed of 500 rpm.

In this way, the coalescence inhibiting additive was introduced prior to introduction to the foam, replicating an upstream location of the second inlet 130.

A first test was performed wherein polycarboxylate (PCE) was used as a coalescence inhibiting additive, and a second test was performed wherein Potassium Sulphate (K₂SO₄) was used as a coalescence inhibiting additive.

In the following laboratory tests, the cementitious slurry comprised calcium sulphate hemihydrate (stucco). The produced samples had a weight of 8.5 kg/m², a water gauge of 66% and an unstable soap concentration of 1%.

The fluidity of the cementitious slurry was slump tested and a 180-200 mm slump was measured. Slump testing was performed as is known in the art, wherein a spreading test is used to assess the viscosity of the slurry. The slurry was poured into a 5 cm diameter and 10 cm height ring. The slurry then spreads under gravity by lifting the ring and the slump is assessed. The cementitious slurry took 6 minutes to set using the knife set method of testing. The knife set method was performed as is known in the art, wherein the knife set method allows measurement of the initial setting time of the slurry. Initial setting time corresponds to the time wherein the slurry experiences liquid to solid state transition.

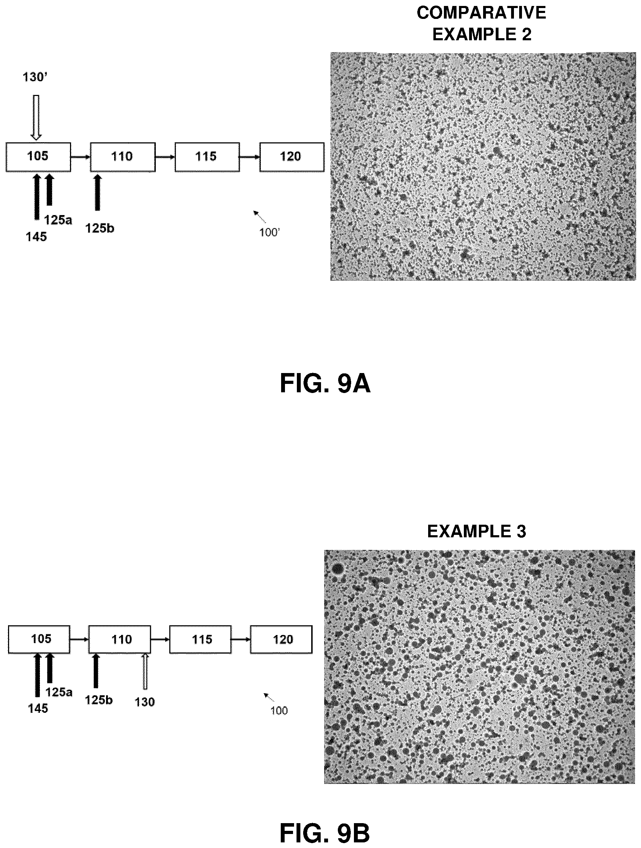

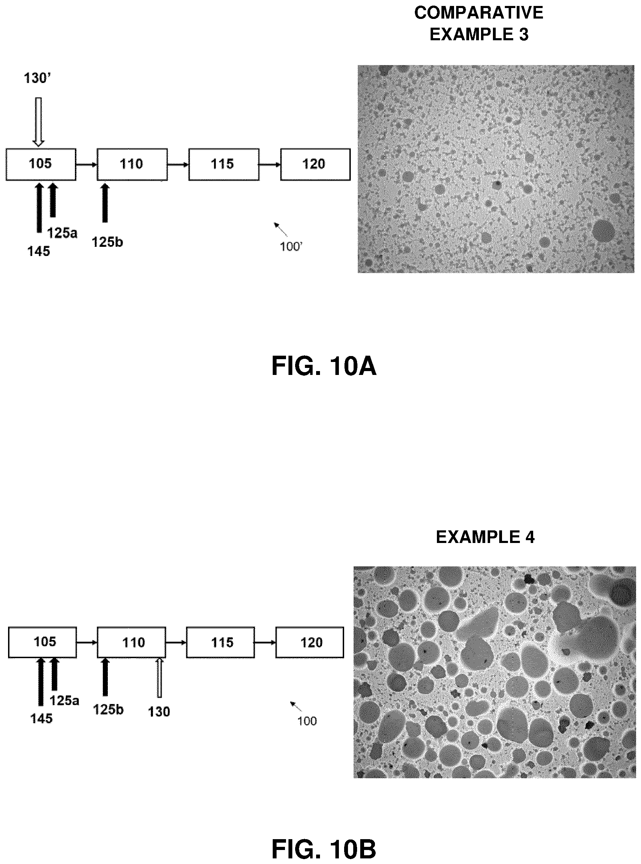

The results of the laboratory testing are shown in Figures 9 and 10 and in Table 2 below.

### Comparative Example 2

The abovementioned steps of Figure 8 for replication of the apparatus 100' of Figure 6 were employed, using PCE as the coalescence inhibiting additive in an amount of 0.25 wt% relative to the stucco. No coalescence promoting agent was added to the cementitious slurry. The apparatus replicated and bubble distribution are shown in Figure 9A. The image of Figure 9A has dimensions 16.9 mm x 12.6 mm.

### Example 3

The abovementioned steps of Figure 7 for replication of the apparatus 100 of Figure 2 were employed, using PCE as the coalescence inhibiting additive in an amount of 0.25 wt% relative to the stucco. No coalescence promoting agent was added to the cementitious slurry. The apparatus replicated and bubble distribution are shown in Figure 9B. The image of Figure 9B has dimensions 16.9 mm x 12.6 mm.

### Comparative Example 3

The abovementioned steps of Figure 8 for replication of the apparatus 100' of Figure 6 were employed, using Potassium Sulphate (K₂SO₄) as the coalescence inhibiting additive in an amount of 0.66 wt% relative to the stucco. Additionally, Poly Naphthalene Sulfonate (PNS) as a coalescence promoting agent was introduced into the vessel during the step of mixing with a shear blade for 40 seconds at 2750 rpm. PNS was introduced in an amount of 0.4 wt% relative to the stucco. The apparatus replicated and bubble distribution are shown in Figure 10A. The image of Figure 10A has dimensions 18.4 mm x 13.8mm.

### Example 4

The abovementioned steps of Figure 7 for replication of the apparatus 100 of Figure 2 were employed, using Potassium Sulphate (K₂SO₄) as the coalescence inhibiting additive in an amount of 0.66 wt% relative to the stucco. Additionally, Poly Naphthalene Sulphonate (PNS) as a coalescence promoting agent was introduced into the vessel during the step of mixing with a shear blade for 40 seconds at 2750 rpm. PNS was introduced in an amount of 0.4 wt% relative to the stucco. The apparatus replicated and bubble distribution are shown in Figure 10B. The image of Figure 10B has dimensions 18.4 mm x 13.8mm.

Table 2 shows the bubble size distribution for each test.

**Table 2**

| **Example** | **D50 bubble size (µm)** | **Acceptable Coalescence** |
|---|---|---|
| Comparative Example 2 | 135 | No |
| Example 3 | 214 | Yes |
| Comparative Example 3 | 197 | No |
| Example 4 | 1258 | Yes |

The coalescence of Comparative Example 2 falls below the acceptable threshold of at least 200 µm, with coalescence reduced by 37% compared to Example 3. It is therefore shown that it is advantageous to introduce the coalescence inhibiting additive after, and therefore downstream of, the introduction of foam.

The coalescence of Comparative Example 3 also falls below the acceptable threshold. Coalescence was reduced by 8% compared to Example 3, again showing that it is advantageous to introduce the coalescence inhibiting additive downstream to the point of introduction of foam.

As such, the advantage of the apparatus 100 of the present invention can be observed. In particular, the advantage wherein the second inlet 130 for introducing a coalescence inhibiting additive into the cementitious slurry is located downstream of the plurality of first inlets 125a, 125b.

## Claims

1. Apparatus for manufacturing a cementitious slurry comprising foam, said apparatus comprising;
a mixing chamber for mixing a cementitious material and water to form a cementitious slurry,
a channel fluidly connected to said mixing chamber at a first end, said channel for receiving a cementitious slurry from said mixing chamber,
said channel extending from said first end and terminating at at least one second end;
said apparatus comprising a first inlet for introducing foam into said mixing chamber or said channel;
said apparatus further comprising a second inlet for introducing a coalescence inhibiting additive into said cementitious slurry downstream of said first inlet.

2. The apparatus of claim 1, wherein said at least one second end of said channel is connected to a distribution hose.

3. The apparatus of claim 1, wherein said at least one second end of said channel is connected to a secondary chamber.

4. The apparatus of any one preceding claim, wherein said second inlet is located between said first inlet and said at least one second end of said channel.

5. The apparatus of claim 3, wherein said second inlet is located in said secondary chamber.

6. The apparatus of any one preceding claim, wherein said second inlet is a fluid inlet.

7. The apparatus of any one preceding claim, wherein said apparatus further comprises a third inlet for introducing a coalescence promoting agent into said cementitious slurry.

8. The apparatus of claim 7, wherein said third inlet is located upstream of said second inlet.

9. The apparatus of claim 7 or claim 8, wherein said second inlet is located downstream of said first inlet.

10. The apparatus of any one of claims 7 to 9, wherein said third inlet is located in said channel.

11. The apparatus of any one of claims 7 to 10, wherein the distance between said third inlet and said first inlet is less than the distance between said third inlet and said second inlet.

12. The apparatus of claim 7, wherein said third inlet is combined with said first inlet.

13. The apparatus of any one preceding claim, wherein said mixing chamber is a tangential mixing chamber.

14. A method of manufacturing a cementitious slurry comprising foam, said method comprising;
providing the apparatus of any one preceding claim;
introducing a cementitious material and water into said mixing chamber to form a cementitious slurry;
introducing foam into said cementitious slurry via said first inlet; and
introducing a coalescence inhibiting additive into said cementitious slurry via said second inlet.

15. The method according to claim 14, wherein said apparatus comprises said third inlet and said method comprises introducing a coalescence promoting agent into said cementitious slurry via said third inlet.
